# EUROPEAN PATENT SPECIFICATION

(11) **EP 3 787 284 B1**
(45) Date of publication and mention of the grant of the patent: **04.11.2026**
(21) Application number: 20201366.0
(22) Date of filing: 10.06.2008
(51) Int. Cl.: H04N 5/44, H04N 21/422, H04N 21/41, H04N 5/63

(54) **REMOTE CONTROLLER FOR SETTING MODE ACCORDING TO STATE OF BROADCAST RECEIVING APPARATUS**
FERNSTEUERUNG FÜR EINEN EINSTELLUNGSMODUS GEMÄSS DEM STATUS EINER RUNDFUNKEMPFANGSVORRICHTUNG
CONTRÔLEUR À DISTANCE POUR RÉGLER LE MODE EN FONCTION DE L'ÉTAT DE L'APPAREIL DE RÉCEPTION DE DIFFUSION

(30) Priority: 08.11.2007 KR 20070113885
(43) Date of publication of application: 03.03.2021
(60) Divisional application: 22207960.0 / 4 156 699
(62) Document number(s) of the earlier application(s) in accordance with Art. 76 EPC: 13189212.7 / 2 688 292; 08157965.8 / 2 059 032
(73) Proprietor: Samsung Electronics Co., Ltd., Gyeonggi-do 16677 (KR)
(72) Inventor: JUNG, Young-mi, Daegu (KR)
(74) Representative: Appleyard Lees IP LLP

(56) References cited:
- JP-A- 2001 268 658
- US-A- 5 684 526
- US-A- 6 011 546
- US-A1- 2006 267 726
- US-A1- 2007 185 968
- US-B1- 6 407 779
- HITACHI ET AL: "HDMI Specification Version 1.3a", INTERNET CITATION, 10 November 2006 (2006-11-10), XP002476103, Retrieved from the Internet <URL:http://www.hdmi.org/download/HDMISpecification13a.pdf> [retrieved on 20080408]

## Description

### BACKGROUND OF THE INVENTION

### 1. Field of the Invention

Apparatuses consistent with the present invention relate to a remote controller, and more particularly, to a remote controller which receives a user command for controlling a broadcast receiving apparatus, and transmits the received command to the broadcast receiving apparatus.

### 2. Description of the Related Art

A remote controller is an electronic device used for the remote operation of a machine. The remote controller is widely used to manipulate a television (TV).

JP 2001 268658 A discloses an information apparatus capable of two-way wireless communication, wherein a remote controller automatically turns off its own power to conserve energy if it does not receive an existence confirmation signal from the main information processing apparatus within a predetermined period of time.

US 5 684 526 A describes a system and remote control transmitter for responding to two-way broadcast programs, which calculates the time difference between a user's response operation and the actual transmission, and adds this time difference to the transmitted response information.

XP002476103 (HITACHI ET AL: "HDMI Specification Version 1.3a") discloses the High-Definition Multimedia Interface standard, detailing the specifications for bidirectional communication, configuration, and device control protocols such as the Consumer Electronics Control (CEC) link.

The remote controller transmits a command received from a user to a TV via infrared (IR) radiation. IR radiation is electromagnetic radiation of a wavelength shorter than that of microwaves. IR radiation cannot penetrate objects, and is inappropriate to transfer massive information.

To solve above drawbacks, a remote controller using radio frequency (RF) communication is provided. However, the type of remote controller has increase power consumption.

Therefore, a method is required, which causes a remote controller to consume less power.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a remote control apparatus which sets an operation mode according to information regarding a state of a broadcast receiving apparatus received from the broadcast receiving apparatus to reduce power consumption, and a method for setting a mode thereof.

The present invention also provides a broadcast receiving apparatus which transmits information regarding a state of the broadcast receiving apparatus to a remote control apparatus in order to set an operation mode of the remote control apparatus according to the information regarding the state of the broadcast receiving apparatus.

According to an exemplary aspect of the present invention, there is provided a remote control apparatus, comprising a communication module which is connected to a broadcast receiving apparatus for communication; a user input unit which receives a user command regarding the broadcast receiving apparatus; and a controller which transmits the user command input through the user input unit to the broadcast receiving apparatus through the communication module, and sets an operation mode according to information regarding a state of the broadcast receiving apparatus received from the broadcast receiving apparatus through the communication module.

If it is determined that the broadcast receiving apparatus is in a predetermined state, the controller may set the remote control apparatus to a mode to consume less power.

The predetermined state may represent that the broadcast receiving apparatus is turned off.

If it is determined that the broadcast receiving apparatus is in the predetermined state, the controller may set the remote control apparatus to a first mode in which power consumption is reduced, and if the user command is not input through the user input unit for a predetermined time, the controller may set the remote control apparatus to a second mode in which power consumption is reduced.

Less power may be consumed in the first mode than in the second mode.

If it is determined that the broadcast receiving apparatus is turned on, the controller may set the remote control apparatus to active mode.

The remote control apparatus comprises a display, wherein if it is determined that video information is received from the broadcast receiving apparatus through the communication module, the controller may activate the display, and display the received information on the display.

The video information may comprise at least one of: information stored in the broadcast receiving apparatus; information acquired by the broadcast receiving apparatus from an external source; information to inform a user of a predetermined condition; and information relating to states of devices adjacent to the broadcast receiving apparatus.

The user input unit may receive the user command by detecting both a user manipulation of elements of the remote control apparatus, and the user moving the remote control apparatus.

According to another exemplary aspect of the present invention, there is provided a method for setting a mode of a remote control apparatus connected to a broadcast receiving apparatus for communication, the method comprising transmitting an input user command to the broadcast receiving apparatus; and setting an operation mode of the remote control apparatus according to information regarding a state of the broadcast receiving apparatus received from the broadcast receiving apparatus.

If it is determined that the broadcast receiving apparatus is in a predetermined state, the setting may set the remote control apparatus to a mode to consume less power.

The predetermined state may represent that the broadcast receiving apparatus is turned off.

If it is determined that the broadcast receiving apparatus is in the predetermined state, the setting may set the remote control apparatus to a first mode to consume less power, and if the user command is not input through the user input unit for a predetermined time, the setting may set the remote control apparatus to a second mode to consume less power.

Less power may be consumed in the first mode than in the second mode.

If it is determined that the broadcast receiving apparatus is turned on, the setting may set the remote control apparatus to an active mode.

The method may comprise activating a display if video information is received from the broadcast receiving apparatus; and displaying the received video information on the display.

The video information may comprise at least one of: information stored in the broadcast receiving apparatus; information acquired by the broadcast receiving apparatus from an external source; information to inform a user of a predetermined condition; and information relating to states of devices adjacent to the broadcast receiving apparatus.

The user command may be input by detecting at least one of a user manipulation of elements of the remote control apparatus, and the user moving the remote control apparatus.

According to another exemplary aspect of the present invention, there is provided a broadcast receiving apparatus which receives broadcast, and provides a user with the received broadcast, the apparatus comprising a communication module which is connected to a remote control apparatus for communication; and a controller which controls the broadcast receiving apparatus according to a user command input from the remote control apparatus through the communication module, and transmits information regarding a state of the broadcast receiving apparatus to the remote control apparatus through the communication module in order to set an operation mode of the remote control apparatus according to the information regarding a state of the broadcast receiving apparatus.

The state of the broadcast receiving apparatus may comprise at least one of a power off state and a power on state, and the operation mode of the remote control apparatus may comprise a mode to consume less power of the remote control apparatus.

The controller may transmit the user command input through an operating element of the broadcast receiving apparatus to the remote control apparatus through the communication module.

According to another exemplary aspect of the present invention, there is provided a method for controlling a broadcast receiving apparatus which receives broadcast, and provides a user with the received broadcast, the apparatus comprising controlling the broadcast receiving apparatus according to a user command input from a remote control apparatus; and transmitting information regarding a state of the broadcast receiving apparatus to the remote control apparatus in order to set an operation mode of the remote control apparatus according to the information regarding a state of the broadcast receiving apparatus.

The state of the broadcast receiving apparatus may comprise at least one of a power off state and a power on state, and the operation mode of the remote control apparatus may comprise a mode to consume less power of the remote control apparatus.

The method may further comprise transmitting the user command input through an operating element of the broadcast receiving apparatus to the remote control apparatus.

According to another exemplary aspect of the present invention, there is provided a broadcast receiving system, comprising a remote control apparatus which transmits an input user command; and a broadcast receiving apparatus which controls an operation according to the user command received from the remote control apparatus, and transmits information regarding a state thereof to the remote control apparatus, wherein the remote control apparatus sets an operation mode thereof according to the information received from the broadcast receiving apparatus.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a view of illustrating an exemplary broadcast receiving system applicable to the present invention;
FIG. 2 is a view illustrating the operation between a remote controller and a digital television (DTV) when a user desires to turn on the DTV using the remote controller according an exemplary embodiment of the present invention;
FIG. 3 is a view illustrating the operation between a remote controller and a DTV after the DTV is turned on according an exemplary embodiment of the present invention; and
FIG. 4 is a view illustrating the operation between a remote controller and a DTV when a use desires to turn off the DTV using a power button provided to the DTV according an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

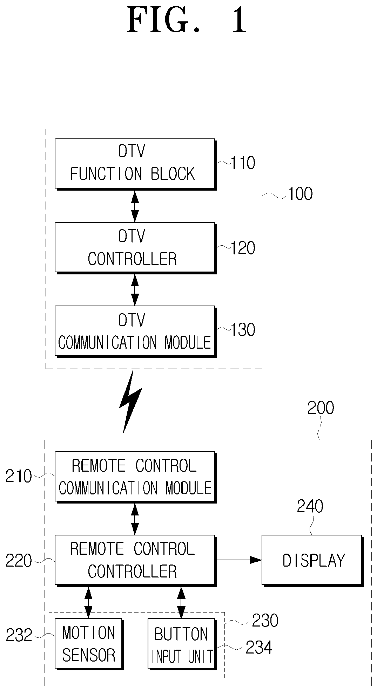

FIG. 1 is a view of illustrating a broadcast receiving system applicable to the present invention. Referring to FIG. 1, a broadcast receiving system comprises a DTV 100 as a broadcast receiving apparatus and a remote controller 200.

The DTV 100 provides a user with broadcast received over wire or wirelessly, and the remote controller 200 receives user inputs regarding the DTV 100. The DTV 100 and the remote controller 200 are communicably linked to each via radio frequency (RF) communication. The remote controller 200 may transmit the input user command to the DTV 100.

The DTV 100 comprises a DTV function block 110, a DTV controller 120, and a DTV communication module 130 as illustrated in FIG. 1.

The DTV function block 110 performs basic functions of the DTV 100. That is, the DTV function block 110 receives a digital broadcast signal, demodulates the received digital broadcast signal, decodes the demodulated digital broadcast signal, processes the decoded digital broadcast signal, and outputs the processed digital broadcast signal to provide a user with digital broadcast.

The DTV communication module 130 is communicably linked to the remote controller 200 for RF communication.

The DTV controller 120 controls the operation of the DTV function block 110 according to a user command which is received from the remote controller 200 through the DTV communication module 130.

The DTV controller 120 transmits information regarding a state of the operation of the DTV 100 to the remote controller 200 through the DTV communication module 130. The operation state of the DTV 100 may include power on and off states.

The remote controller 200 comprises a remote control communication module 210, a remote control controller 220, a user input unit 230, and a display 240.

The remote control communication module 210 is communicably linked to the DTV 100 for RF communication.

The user input unit 230 comprises a motion sensor 232 and a button input unit 234 to receive a user command.

The motion sensor 232 senses movement of the remote controller 200 according to a user manipulation, and transmits the sensed result to the remote control controller 220. In particular, a user moves the remote controller 200 up or down, or to the right or left, or rotates the remote controller 200 while holding the remote controller 200. The motion sensor 232 senses a direction and degree of movement of the remote controller 200, and transmits the sensed result to the remote control controller 220.

The movement of the remote controller 200, caused by a user, may be processed as a user command. For example, if a user moves the remote controller 200 up or down, or to the right or left, this may be input as a command directing to move a curser or a pointer on the DTV 100 up or down, or to the right or left.

The motion sensor 232 may be embodied as a gyro sensor to perform the above functions.

The button input unit 234 may comprise a power button, a volume button, and a selection button, and a user may input a desired command by pressing a corresponding button.

The remote control controller 220 transmits a user command input through the user input unit 230 to the DTV 100 through the remote control communication module 210.

The remote control controller 220 sets an operation mode of the remote controller 200 based on a DTV operation state and a user command input state representing that a user has not input the remote controller 200 for a predetermined period of time.

The remote control controller 220 sets the remote controller to an active mode, an idle mode, or a sleep mode according to the above two states, which will be explained below in detail.

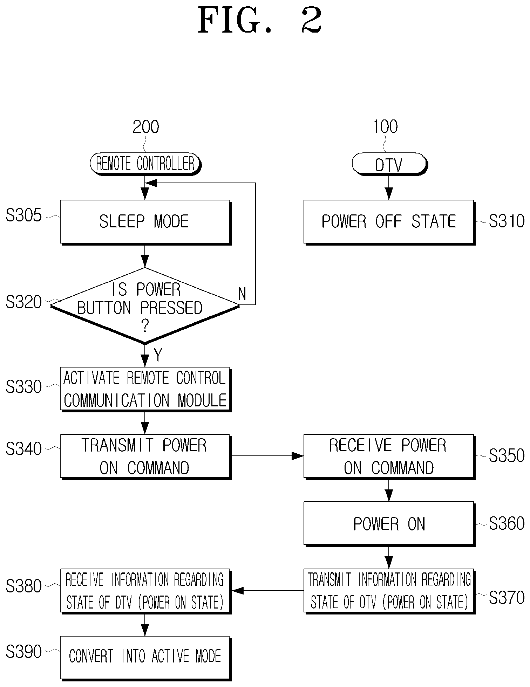

FIG. 2 is a view illustrating the operation between the remote controller 200 and the DTV 100 when a user desires to turn on the DTV using the remote controller 200.

The remote controller 200 is in the sleep mode (S305), and the DTV 100 is in a power off state (S310).

In the sleep mode, the DTV 100 is placed in a state of waiting for a power on command and the remote controller 200 only operates to sense a user pressing on the power button.

Even when the DTV 100 is turned off, the DTV controller 120 and the DTV communication module 130 are in an activation state to receive a user command transmitted from the remote controller 200.

If a user presses the power button on the button input unit 234 (S320-Y), the remote control controller 220 senses that the power button is pressed, and activates the remote control communication module 210 (S330). The remote control controller 220 transmits a power on command to the DTV 100 through the remote control communication module 210 (S340).

The DTV controller 120 of the DTV 100 receives the power on command transmitted in operation S340 through the DTV communication module 130 (S350). The DTV controller 120 activates the DTV function block 110 to turn on the DTV 100 (S360).

The DTV controller 120 transmits information regarding a state of the DTV 100, that is a power on state, to the remote controller 200 through the DTV communication module 130 (S370).

The remote control controller 220 receives the information regarding the state of the DTV 100 transmitted in operation S370 through the remote control communication module 210 (S380).

The remote control controller 220 determines the power on state of the DTV 100 from the information received from the DTV 100, and activates the display 240, the motion sensor 232, the button input unit 234, and all the buttons of the button input unit 234 excluding the power button to change the remote controller 200 to active mode (S390).

As the power button has already been activated, activation of the power button is excluded in operation S390.

When operation S390 is finished, all the elements of the remote controller 200 are activated, which represents that the remote controller 200 is set to the active mode.

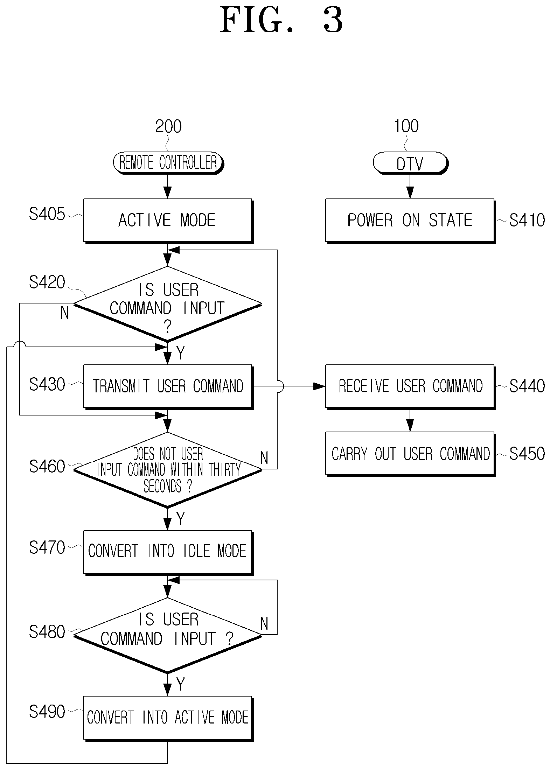

Hereinbelow, the operation between the remote controller 200 and the DTV 100 after the DTV 110 is turned on will be explained in detail with reference to FIG. 3.

The remote controller 200 is in the active mode (S405), and the DTV 100 is in a power on state (S410).

If a user inputs a command using the user input unit 230 (S420-Y), the remote control controller 220 senses the input user command, and transmits the sensed user command to the DTV 100 through the remote control communication module 210 (S430).

The input of the user command in operation S420 is determined according to: i) whether the motion sensor 232 senses movement of the remote controller 200; or ii) according to whether a user presses a button of the button input unit 234.

The DTV controller 120 of the DTV 100 receives the user command transmitted in operation S430 through the DTV communication module 130 (S440). The DTV controller 120 controls the DTV function block 110 to carry out the received user command (S450).

If a user does not input a command within thirty seconds (S420-N and S460-Y), the remote control controller 220 sets the remote controller 200 to the idle mode (S470).

In the idle mode, the display 240 is set to an inactivation state, and the remote communication module 210, the motion sensor 232, and the button input unit 234 are maintained in an activation state.

Accordingly, in operation S470, the remote control controller 220 sets the display 240 to an inactivation state.

If a user inputs a command using the user input unit 230 while the remote controller 200 is in the idle mode (S480-Y), the remote control controller 220 sets the remote controller 200 to the active mode (S490).

Accordingly, in operation S490, the remote control controller 220 sets the display inactivated by operation S470 to an activation state. After performing operation S490, the operation returns to operation S430.

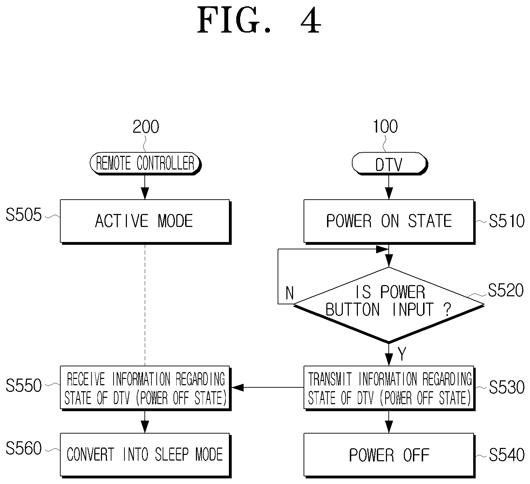

FIG. 4 is a view illustrating the operation between the remote controller 200 and the DTV 100 when a use desires to turn off the DTV 1100 using a power button of the DTV 100 instead of the remote controller 200.

The remote controller 200 is in the active mode (S505), and the DTV 100 is in a power on state (S510).

If a user presses a power button of the DTV 100 (S520-Y), the DTV controller 120 senses that the power button is pressed, and transmits information regarding a state of the DTV 100, that is a power off state, to the remote controller 200 through the DTV communication module 130 (S530). The DTV controller 120 inactivates the DTV function block 110 of the DTV 100 to turn off the DTV 100 (S540).

The remote control controller 220 receives the information regarding the state of the DTV 100 transmitted in operation S530 through the remote control communication module 210 (S550).

The remote control controller 200 perceives that the DTV 100 is turned off based on the received information, and inactivates the remote control communication module 210, the display 240, the motion sensor 232, and all the buttons of the button input unit 234 excluding the power button to set the remote controller 200 to the sleep mode (S560). That is, in operation S560, only the function to sense whether the power button is input is activated, while the rest of the functions are inactivated.

FIG. 4 describes the operation between the remote controller 200 and the DTV 100 when a user desires to turn off the DTV 100 using the power button of the DTV 100. However, the user may use a power button of the remote controller 200 instead of the power button of the DTV 100 to turn off the DTV 100.

The remote control controller 220 senses that the user inputs the power button of the remote controller 200, and transmits a power off command to the DTV 100 through the remote control communication module 210.

The DTV controller 120 receives the power off command through the DTV communication module 130, and inactivates the DTV function block 110 to turn off the DTV 100.

The DTV controller 120 transmits information regarding a state of the DTV 100, that is a power off state to the remote controller 220 through the DTV communication module 130. The remote control controller 220 receives the information regarding the power off state of the DTV 100 through the remote control communication module 210.

The remote control controller 220 perceives the power off state of the DTV 100 based on the received information, and thus sets the remote controller 200 to the sleep mode.

According to the exemplary embodiments of the present invention, when a user presses the power button of the DTV 100 to turn off the DTV 100, the remote controller 200 is set to the sleep mode. However, this is merely an exemplary embodiment of the present invention for a convenient description. Alternatively, when the user presses the power button of the DTV 100 to turn on the DTV 100, it is possible for the remote controller 200 to be set to the active mode.

According to the exemplary embodiments of the present invention, the user input unit 230 includes the motion sensor 232 to sense the movement of the remote controller 200 and the button input unit 234 to receive a user command. The user input unit 230 may employ other devices such as a touch screen, a joystick, and a jog wheel, and a user may input a user command using such devices. Embodiments featuring a user input unit that does not comprise a motion sensor and the button input unit are not encompassed by the wording of the claims.

While the state of the DTV 100 is classified as a power on and power off states according to the exemplary embodiments of the present invention, this is merely an exemplary embodiment of the present invention. Accordingly, other states of the DTV 100 are applicable to the present invention. For example, when the DTV 100 is in idle state, or is connected to external apparatuses, the remote controller 200 may be set to a predetermined mode.

The operation mode of the remote controller 200 is classified as the active mode, the idle mode, and the sleep mode in the exemplary embodiment of the present invention. As this is merely an exemplary embodiment of the present invention, the operation mode of the remote controller 200 may be classified as other modes.

Since the idle mode and sleep mode save electrical consumption, any low power consuming modes for the remote controller 200 may be applicable to replace the idle or sleep mode of the present invention. That is, the other modes with different names of descriptions may be applied to the present invention.

The exemplary embodiments of the present invention also do not limit that the remote controller 200 should be set to a lower power consuming mode upon determining the DTV to be in a predetermined state. Therefore, other modes are applicable to the remote controller 200 according to the exemplary embodiment of the present invention.

For example, if it is determined that the DTV 100 transmits video information to the remote controller 200, the remote controller 200 may be set to a mode for activating the display 240, and display the received video information on the display 240.

The video information may be information stored in the DTV 100, information acquired from an external source such as external apparatus or the Internet, information informing a user of a predetermined state, or information regarding a state of devices adjacent to the DTV 100.

For example, the information informing a user of a predetermined state may include a notification that a predetermined alarm time has expired, and the information regarding a state of devices adjacent to the DTV 100 may include a notification that a short message service (SMS) is received in a mobile phone.

While the DTV 100 is connected to the remote controller 200 for the RF communication in the exemplary embodiment of the present invention described above, this is merely an exemplary embodiment of the present invention. The DTV 100 may be connected to the remote controller 200 for other communication.

While the DTV 100 according to the exemplary embodiment of the present invention is described as a broadcast receiving apparatus, other broadcast receiving apparatuses may be applied to the present invention, such as other electric devices.

As described above, according to the present invention, an operation mode of a remote control apparatus can be set automatically according to information regarding a state of a broadcast receiving apparatus. Accordingly, less power is consumed in the remote control apparatus than in a conventional remote control apparatus.

The present teaching can be readily applied to other types of apparatuses. Also, the description of the exemplary embodiments of the present invention is intended to be illustrative, and many alternatives, modifications, and variations will be apparent to those skilled in the art.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is defined by the appended claims.

## Claims

1. A remote control apparatus for controlling a broadcast receiving apparatus, the remote control apparatus comprising:
a remote control communication module (210);
a user input unit (230) comprising a plurality of buttons including a power button for controlling a power on state and a power off state of the broadcast receiving apparatus; and
a remote control controller (220) configured to:
based on the power button of the remote control apparatus being pressed, activate the remote control communication module (210) and transmit a signal to turn-on the broadcast receiving apparatus;
receive, through the remote control communication module (210) from the broadcast receiving apparatus, information regarding a power on state of the broadcast receiving apparatus,
based on the information regarding the power on state of the broadcast receiving apparatus, activate a display (240), a motion sensor (232), a button input unit (234), and all the buttons of the button input unit excluding the power button of the remote control apparatus,
based on the power button being pressed, while the broadcast receiving apparatus is turned on and a communication connection with the broadcast receiving apparatus is established, control the remote control communication module to transmit a signal to turn off the broadcast receiving apparatus,
receive, through the remote control communication module (210) from the broadcast receiving apparatus, information regarding a power off state of the broadcast receiving apparatus, and
based on the information regarding the power off state of the broadcast receiving apparatus, inactivate the remote control apparatus whereby the remote control only operates to sense a user pressing on the power button,
wherein the remote control apparatus consumes less power when the remote control communication module is inactivated than when the remote control communication module is activated.

2. The remote control apparatus of claim 1,
wherein the communication connection is a radio frequency communication.

3. The remote control apparatus of claim 1,
wherein the remote control controller (220) is configured to activate the motion sensor of the remote control apparatus to sense a movement of the remote control apparatus based on power status information received from the broadcast receiving apparatus indicating the power on state of the broadcast receiving apparatus.

4. The remote control apparatus of claim 3,
wherein the remote control controller (220) is configured to, in response to receiving the information regarding the power off state of the broadcast receiving apparatus transmitted by the broadcast receiving apparatus, change an operation state of the display and the motion sensor from activated to inactivated.

5. An electronic system comprising a broadcast receiving apparatus and a remote control apparatus for controlling the broadcast receiving apparatus,
the remote control apparatus comprising a remote control communication module (210), a user input unit (230) comprising a plurality of buttons including a power button for controlling a power on state and a power off state of the broadcast receiving apparatus; and
a remote control controller (220) configured to:
based on the power button of the remote control apparatus being pressed, activate the remote control communication module (210) and transmit a signal to turn-on the broadcast receiving apparatus; and
receive, through the remote control communication module (210) from the broadcast receiving apparatus, information regarding a power on state of the broadcast receiving apparatus;
based on the information regarding the power on state of the broadcast receiving apparatus, activate a display (240), a motion sensor (232), a button input unit (234), and all the buttons of the button input unit excluding the power button of the remote control apparatus;
based on the power button being pressed, while the broadcast receiving apparatus is turned on and a communication connection with the broadcast receiving apparatus is established, control the remote control communication module to transmit a signal to turn off the broadcast receiving apparatus;
receive, through the remote control communication module (210) from the broadcast receiving apparatus, information regarding a power off state of the broadcast receiving apparatus; and
based on the information regarding the power off state of the broadcast receiving apparatus, inactivate the remote control apparatus whereby the remote control only operates to sense a user pressing on the power button;
the broadcast receiving apparatus being configured to:
receive, from the remote control apparatus, a signal corresponding to a user input received through the user input unit of the remote control apparatus;
control the power on state or the power off state of the broadcast receiving apparatus based on the received signal; and
transmit, to the remote control apparatus, information regarding the power on state or the power off state of the broadcast receiving apparatus; and
wherein the remote control apparatus consumes less power when the remote control communication module operates in an inactivated state than when the remote control communication module operates in an active state.

6. The electronic system of claim 5,
wherein the communication connection is a radio frequency communication.

## Patentansprüche

1. Fernsteuerungsvorrichtung zum Steuern einer Rundfunkempfangsvorrichtung, wobei die Fernsteuerungsvorrichtung Folgendes umfasst:
ein Fernsteuerungskommunikationsmodul (210);
eine Benutzereingabeeinheit (230), die eine Vielzahl von Tasten umfasst, die eine An-/Ausschalttaste zum Steuern eines Anschaltzustands und eines Ausschaltzustands der Rundfunkempfangsvorrichtung enthalten; und
eine Fernsteuerungssteuerung (220), die zu Folgendem konfiguriert ist:
Aktivieren des Fernsteuerungskommunikationsmoduls (210) und Übertragen eines Signals, um die Rundfunkempfangsvorrichtung einzuschalten, basierend darauf, dass die An-/Ausschalttaste der Fernsteuerungsvorrichtung gedrückt wird;
Empfangen von Informationen bezüglich eines Anschaltzustands der Rundfunkempfangsvorrichtung durch das Fernsteuerungskommunikationsmodul (210) von der Rundfunkempfangsvorrichtung,
basierend auf den Informationen bezüglich des Anschaltzustands der Rundfunkempfangsvorrichtung, Aktivieren einer Anzeige (240), eines Bewegungssensors (232), einer Tasteneingabeeinheit (234) und aller Tasten der Tasteneingabeeinheit mit Ausnahme der An-/Ausschalttaste der Fernsteuerungsvorrichtung,
basierend darauf, dass die An-/Ausschalttaste gedrückt wird, während die Rundfunkempfangsvorrichtung eingeschaltet ist und eine Kommunikationsverbindung mit der Rundfunkempfangsvorrichtung hergestellt ist, Steuern des Fernsteuerungskommunikationsmoduls, sodass es ein Signal überträgt, um die Rundfunkempfangsvorrichtung abzuschalten,
Empfangen von Informationen bezüglich eines Ausschaltzustands der Rundfunkempfangsvorrichtung durch das Fernsteuerungskommunikationsmodul (210) von der Rundfunkempfangsvorrichtung und
Deaktivieren der Fernsteuerungsvorrichtung basierend auf den Informationen bezüglich des Ausschaltzustands der Rundfunkempfangsvorrichtung, wodurch die Fernsteuerung nur arbeitet, um zu erfassen, dass ein Benutzer auf die An-/Ausschalttaste drückt,
wobei die Fernsteuerungsvorrichtung weniger Leistung verbraucht, wenn das Fernsteuerungskommunikationsmodul deaktiviert ist, als wenn das Fernsteuerungskommunikationsmodul aktiviert ist.

2. Fernsteuerungsvorrichtung nach Anspruch 1,
wobei die Kommunikationsverbindung eine Funkfrequenzkommunikation ist.

3. Fernsteuerungsvorrichtung nach Anspruch 1,
wobei die Fernsteuerungssteuerung (220) dazu konfiguriert ist, den Bewegungssensor der Fernsteuerungsvorrichtung zu aktivieren, um eine Bewegung der Fernsteuerungsvorrichtung basierend auf von der Rundfunkempfangsvorrichtung empfangenen An- /Ausschaltstatusinformationen, die den Anschaltzustand der Rundfunkempfangsvorrichtung angeben, zu erfassen.

4. Fernsteuerungsvorrichtung nach Anspruch 3,
wobei die Fernsteuerungssteuerung (220) dazu konfiguriert ist, als Reaktion auf das Empfangen der Informationen bezüglich des Ausschaltzustands der Rundfunkempfangsvorrichtung, die durch die Rundfunkempfangsvorrichtung gesendet werden, einen Betriebszustand der Anzeige und des Bewegungssensors von aktiviert zu deaktiviert zu ändern.

5. Elektronisches System, umfassend eine Rundfunkempfangsvorrichtung und eine Fernsteuerungsvorrichtung zum Steuern der Rundfunkempfangsvorrichtung,
wobei die Fernsteuerungsvorrichtung ein Fernsteuerungskommunikationsmodul (210), eine Benutzereingabeeinheit (230), die eine Vielzahl von Tasten umfasst, die eine An-/Ausschalttaste zum Steuern eines Anschaltzustands und eines Ausschaltzustands der Rundfunkempfangsvorrichtung enthalten; und
eine Fernsteuerungssteuerung (220) umfasst, die zu Folgendem konfiguriert ist:
Aktivieren des Fernsteuerungskommunikationsmoduls (210) und Übertragen eines Signals, um die Rundfunkempfangsvorrichtung einzuschalten, basierend darauf, dass die An-/Ausschalttaste der Fernsteuerungsvorrichtung gedrückt wird; und
Empfangen von Informationen bezüglich eines Anschaltzustands der Rundfunkempfangsvorrichtung durch das Fernsteuerungskommunikationsmodul (210) von der Rundfunkempfangsvorrichtung;
basierend auf den Informationen bezüglich des Anschaltzustands der Rundfunkempfangsvorrichtung, Aktivieren einer Anzeige (240), eines Bewegungssensors (232), einer Tasteneingabeeinheit (234) und aller Tasten der Tasteneingabeeinheit mit Ausnahme der An-/Ausschalttaste der Fernsteuerungsvorrichtung;
basierend darauf, dass die An-/Ausschalttaste gedrückt wird, während die Rundfunkempfangsvorrichtung eingeschaltet ist und eine Kommunikationsverbindung mit der Rundfunkempfangsvorrichtung hergestellt ist, Steuern des Fernsteuerungskommunikationsmoduls, sodass es ein Signal überträgt, um die Rundfunkempfangsvorrichtung abzuschalten;
Empfangen von Informationen bezüglich eines Ausschaltzustands der Rundfunkempfangsvorrichtung durch das Fernsteuerungskommunikationsmodul (210) von der Rundfunkempfangsvorrichtung; und
Deaktivieren der Fernsteuerungsvorrichtung basierend auf den Informationen bezüglich des Ausschaltzustands der Rundfunkempfangsvorrichtung, wodurch die Fernsteuerung nur arbeitet, um zu erfassen, dass ein Benutzer auf die An-/Ausschalttaste drückt;
wobei die Rundfunkempfangsvorrichtung zu Folgendem konfiguriert ist:
Empfangen eines Signals, das einer Benutzereingabe entspricht, die durch die Benutzereingabeeinheit der Fernsteuerungsvorrichtung empfangen wird, von der Fernsteuerungsvorrichtung;
Steuern des Anschaltzustands oder des Ausschaltzustands der Rundfunkempfangsvorrichtung basierend auf dem empfangenen Signal; und
Übertragen von Informationen bezüglich des Anschaltzustands oder des Ausschaltzustands der Rundfunkempfangsvorrichtung an die Fernsteuerungsvorrichtung; und
wobei die Fernsteuerungsvorrichtung weniger Leistung verbraucht, wenn sich das Fernsteuerungskommunikationsmodul in einem deaktivierten Zustand befindet, als wenn sich das Fernsteuerungskommunikationsmodul in einem aktivierten Zustand befindet.

6. Elektronisches System nach Anspruch 5,
wobei die Kommunikationsverbindung eine Funkfrequenzkommunikation ist.

## Revendications

1. Appareil de commande à distance destiné à commander un appareil de réception de diffusion, l'appareil de commande à distance comprenant :
un module de communication de commande à distance (210) ;
une unité d'entrée d'utilisateur (230) comprenant une pluralité de boutons comprenant un bouton d'alimentation destiné à commander un état de mise sous tension et un état de mise hors tension de l'appareil de réception de diffusion ; et
un contrôleur de commande à distance (220) configuré pour :
sur la base de l'appui sur le bouton d'alimentation de l'appareil de commande à distance, activer le module de communication de commande à distance (210) et transmettre un signal pour allumer l'appareil de réception de diffusion ;
recevoir, par l'intermédiaire du module de communication de commande à distance (210) en provenance de l'appareil de réception de diffusion, des informations concernant un état de mise sous tension de l'appareil de réception de diffusion,
sur la base des informations concernant l'état de mise sous tension de l'appareil de réception de diffusion, activer un affichage (240), un capteur de mouvement (232), une unité d'entrée de bouton (234), et tous les boutons de l'unité d'entrée de boutons à l'exclusion du bouton d'alimentation de l'appareil de commande à distance,
sur la base de l'appui sur le bouton d'alimentation, alors que l'appareil de réception de diffusion est allumé et qu'une connexion de communication avec l'appareil de réception de diffusion est établie, commander au module de communication de commande à distance de transmettre un signal pour éteindre l'appareil de réception de diffusion,
recevoir, par l'intermédiaire du module de communication de commande à distance (210) en provenance de l'appareil de réception de diffusion, des informations concernant un état de mise hors tension de l'appareil de réception de diffusion, et
sur la base des informations concernant l'état de mise hors tension de l'appareil de réception de diffusion, désactiver l'appareil de commande à distance, moyennant quoi la commande à distance fonctionne uniquement pour détecter l'appui par un utilisateur sur le bouton d'alimentation,
dans lequel l'appareil de commande à distance consomme moins d'énergie lorsque le module de communication de commande à distance est désactivé que lorsque le module de communication de commande à distance est activé.

2. Appareil de commande à distance selon la revendication 1,
dans lequel la connexion de communication est une communication radiofréquence.

3. Appareil de commande à distance selon la revendication 1,
dans lequel le contrôleur de commande à distance (220) est configuré pour activer le capteur de mouvement de l'appareil de commande à distance pour détecter un mouvement de l'appareil de commande à distance sur la base d'informations de statut de tension reçues en provenance de l'appareil de réception de diffusion indiquant l'état de mise sous tension de l'appareil de réception de diffusion.

4. Appareil de commande à distance selon la revendication 3,
dans lequel le contrôleur de commande à distance (220) est configuré pour, en réponse à la réception des informations concernant l'état de mise hors tension de l'appareil de réception de diffusion transmises par l'appareil de réception de diffusion, modifier un état de fonctionnement de l'affichage et du capteur de mouvement de l'état activé à l'état désactivé.

5. Système électronique comprenant un appareil de réception de diffusion et un appareil de commande à distance destiné à commander l'appareil de réception de diffusion,
l'appareil de commande à distance comprenant un module de communication de commande à distance (210), une unité d'entrée d'utilisateur (230) comprenant une pluralité de boutons comprenant un bouton d'alimentation destiné à commander un état de mise sous tension et un état de mise hors tension de l'appareil de réception de diffusion ; et
un contrôleur de commande à distance (220) configuré pour :
sur la base de l'appui sur le bouton d'alimentation de l'appareil de commande à distance, activer le module de communication de commande à distance (210) et transmettre un signal pour allumer l'appareil de réception de diffusion ;
recevoir, par l'intermédiaire du module de communication de commande à distance (210) en provenance de l'appareil de réception de diffusion, des informations concernant un état de mise sous tension de l'appareil de réception de diffusion ;
sur la base des informations concernant l'état de mise sous tension de l'appareil de réception de diffusion, activer un affichage (240), un capteur de mouvement (232), une unité d'entrée de bouton (234), et tous les boutons de l'unité d'entrée de bouton à l'exclusion du bouton d'alimentation de l'appareil de commande à distance ;
sur la base de l'appui sur le bouton d'alimentation, alors que l'appareil de réception de diffusion est allumé et qu'une connexion de communication avec l'appareil de réception de diffusion est établie, commander au module de communication de commande à distance de transmettre un signal pour éteindre l'appareil de réception de diffusion ;
recevoir, par l'intermédiaire du module de communication de commande à distance (210) en provenance de l'appareil de réception de diffusion, des informations concernant un état de mise hors tension de l'appareil de réception de diffusion ; et
sur la base des informations concernant l'état de mise hors tension de l'appareil de réception de diffusion, désactiver l'appareil de commande à distance, moyennant quoi la commande à distance fonctionne uniquement pour détecter l'appui par un utilisateur sur le bouton d'alimentation ;
l'appareil de réception de diffusion étant configuré pour :
recevoir, de l'appareil de commande à distance, un signal correspondant à une entrée d'utilisateur reçue par l'intermédiaire de l'unité d'entrée d'utilisateur de l'appareil de commande à distance ;
commander l'état de mise sous tension ou l'état de mise hors tension de l'appareil de réception de diffusion sur la base du signal reçu ; et
transmettre, à l'appareil de commande à distance, des informations concernant l'état de mise sous tension ou l'état de mise hors tension de l'appareil de réception de diffusion ; et
dans lequel l'appareil de commande à distance consomme moins d'énergie lorsque le module de communication de commande à distance fonctionne dans un état désactivé que lorsque le module de communication de commande à distance fonctionne dans un état actif.

6. Système électronique selon la revendication 5,
dans lequel la connexion de communication est une communication radiofréquences.
